# EUROPEAN PATENT APPLICATION

(11) **EP 2 719 722 A1**
(43) Date of publication of application: **16.04.2014**
(21) Application number: 12799905.0
(22) Date of filing: 12.06.2012
(51) Int. Cl.: C08J 9/26, B23B 5/12, B29C 67/20

(54) **PRODUCTION METHOD AND PRODUCTION DEVICE FOR THERMOSETTING RESIN POROUS SHEET, THERMOSETTING RESIN POROUS SHEET AND SHEET ROLL**

(30) Priority: 13.06.2011 JP 2011131554; 29.05.2012 JP 2012122350
(71) Applicant: Nitto Denko Corporation, Osaka 567-8680 (JP)
(72) Inventor: HARADA, Noriaki, Ibaraki-shi Osaka 567-8680 (JP); KAWAGUCHI, Yoshihide, Ibaraki-shi Osaka 567-8680 (JP); NOUMI, Shunsuke, Ibaraki-shi Osaka 567-8680 (JP); YANO, Masaya, Ibaraki-shi Osaka 567-8680 (JP)
(74) Representative: Hart-Davis, Jason
(86) International application number: PCT/JP2012/003838
(87) International publication number: WO 2012/172790

(57) **Abstract**

The present invention provides a method for producing a long strip-shaped porous thermosetting resin sheet free of defective portions leading to breakage. The present invention is a method for producing a porous thermosetting resin sheet, the method including the steps of: cutting a hollow-cylindrical or solid-cylindrical thermosetting resin block containing a porogen into a sheet of a thermosetting resin with a predetermined thickness by bringing a cutting blade into contact with the thermosetting resin block while rotating the thermosetting resin block about a hollow cylinder axis or a solid cylinder axis; and making the resultant thermosetting resin sheet porous by removing the porogen from the thermosetting resin sheet. The cutting blade is reciprocated approximately parallel to a direction of the rotational axis of the thermosetting resin block while the cutting is being performed.

## Description

### TECHNICAL FIELD

The present invention relates to methods and apparatuses for producing porous thermosetting resin sheets, as well as porous thermosetting resin sheets and porous thermosetting resin sheet rolls. Particularly, the present invention relates to a method and apparatus for producing porous thermosetting resin sheets, such as porous epoxy resin sheets, which are usable for battery separators, water treatment membranes, etc., and also relates to a porous thermosetting resin sheet and a porous thermosetting resin sheet roll.

### BACKGROUND ART

Epoxy resin sheets are characterized by being excellent in insulation properties, chemical stability, mechanical strength etc., and have the advantage of being able to be produced at relatively low cost. Furthermore, when an epoxy resin sheet is made porous, the sheet becomes air-permeable or water permeable. Therefore, porous epoxy resin sheets are thought to be one of the useful materials for use in battery separators, water treatment membranes, etc.

Porous sheets for use in battery separators, water treatment membranes etc. need to be thin, and are required to have a thickness of, for example, 300 µm or less. As a method for producing such a porous epoxy resin sheet having a small thickness, the present applicant proposes, in Patent Literature 1, a method in which a hollow-cylindrical or solid-cylindrical thermosetting resin block containing a porogen (micropore-forming agent) is cut at a predetermined thickness with a cutting blade while the thermosetting resin block is being rotated about the hollow-cylinder axis or the solid-cylinder axis, and then the porogen is removed from the resultant sheet.

With this method, porous epoxy resin sheets having a thickness of about 150 µm were obtained in Examples of Patent Literature 1.

However, according to a further study by the present inventors, when the porous thermosetting resin sheet production method described in Patent Literature 1 was employed, an unblemished epoxy resin sheet was obtained initially, but progression of the cutting of the epoxy resin block into the sheet was accompanied by occurrence of blemishes on the resultant sheet. In some cases where a sheet on which blemishes occurred was applied to an industrial product such as a battery separator or a water treatment membrane, breakage of the sheet tended to result from the blemishes when the industrial product was being used or handled. In order to industrially produce a battery separator or a water treatment membrane in which a porous epoxy resin sheet is used, the porous epoxy resin sheet is preferably provided in the form of a long strip-shaped sheet free of defective portions leading to such breakage. In this respect, there is room for improvement in the porous thermosetting resin sheet production method described in Patent Literature 1.

### CITATION LIST

### Patent Literature

Patent Literature 1: JP 2010-121122 A

### SUMMARY OF INVENTION

### Technical Problem

In view of the above, the present invention aims to provide a method for producing a long strip-shaped porous thermosetting resin sheet free of defective portions leading to the above-described breakage, and provide an apparatus used for producing the porous thermosetting resin sheet. In addition, the present invention aims to provide a long strip-shaped porous thermosetting resin sheet suitable for industrial production.

### Solution to Problem

The present invention is a method for producing a porous thermosetting resin sheet, the method including the steps of: cutting a hollow-cylindrical or solid-cylindrical thermosetting resin block containing a porogen into a sheet of a thermosetting resin with a predetermined thickness by bringing a cutting blade into contact with the thermosetting resin block while rotating the thermosetting resin block about a hollow cylinder axis or a solid cylinder axis; and making the resultant thermosetting resin sheet porous by removing the porogen from the thermosetting resin sheet. The cutting blade is reciprocated approximately parallel to a direction of the rotational axis of the thermosetting resin block while the cutting is being performed.

The present invention is also an apparatus for producing a resin sheet, the apparatus including: a shaft having a support portion for supporting a hollow-cylindrical or hollow-cylindrical resin block; a device for rotating the shaft; a cutting blade for cutting the resin block into a resin sheet by contacting with the resin block; and a device for reciprocating the cutting blade approximately parallel to a direction of a rotational axis of the resin block.

The present invention is also a porous thermosetting resin sheet having a thickness of 5 to 300 µm, having a length of 30 m or more, and being free of defective portions having a depth of 3 µm or more.

The present invention is also a porous thermosetting resin sheet roll formed by winding the porous thermosetting resin sheet.

### Advantageous Effects of Invention

The present invention can provide a long strip-shaped porous thermosetting resin sheet free of defective portions that are likely to cause breakage of the sheet. In particular, the present invention makes it easy to industrially produce battery separators (particularly separators for nonaqueous electrolyte batteries such as lithium-ion secondary batteries), water treatment membranes, etc., in which porous epoxy resin sheets are used.

### BRIEF DESCRIPTION OF DRAWINGS

FIG. 1 is a schematic diagram showing an example of a cutting step of a production method of the present invention.
FIG. 2 is an optical photomicrograph (50-fold magnification) of a porous epoxy resin sheet obtained in Example 2.
FIG. 3 is an optical photomicrograph (50-fold magnification) of a porous epoxy resin sheet obtained in Comparative Example 1.
FIG. 4 is an optical photomicrograph (50-fold magnification) of a porous epoxy resin sheet obtained in Comparative Example 2.
FIG. 5 is an optical photomicrograph (50-fold magnification) of the porous epoxy resin sheet of Comparative Example 2 on which a skin layer was formed.

### DESCRIPTION OF EMBODIMENTS

First, a production method of the present invention will be described. The production method of the present invention is a method for producing a porous thermosetting resin sheet. The method includes: a step (cutting step) of cutting a hollow-cylindrical or solid-cylindrical thermosetting resin block containing a porogen into a sheet of a thermosetting resin with a predetermined thickness by bringing a cutting blade into contact with the thermosetting resin block while rotating the thermosetting resin block about the hollow cylinder axis or the solid cylinder axis; and a step (porosification step) of making the resultant thermosetting resin sheet porous by removing the porogen from the thermosetting resin sheet. The cutting blade is reciprocated approximately parallel to a direction of the rotational axis of the thermosetting resin block while the cutting is being performed.

Thermosetting resins usable in the present invention include thermosetting resins that allow a porous body to be formed using a curing agent and a porogen. Examples of the thermosetting resins include epoxy resins, phenolic resins, melamine resins, urea-formaldehyde resins (urea resins), alkyd resins, unsaturated polyester resins, polyurethanes, thermosetting polyimides, silicone resins, and diallyl phthalate resins. In particular, epoxy resins can be preferably used.

Hereinafter, the production method of the present invention will be described using an example where the thermosetting resin is an epoxy resin.

A hollow-cylindrical or solid-cylindrical epoxy resin block containing a porogen can be fabricated as follows: a resin composition containing an epoxy resin (epoxy compound), a curing agent, and a porogen is filled into a hollow-cylindrical or solid-cylindrical mold; and then the epoxy resin is three-dimensionally cross-liked by performing heating as necessary. At this time, a bicontinuous structure is formed as a result of phase separation between the cross-linked epoxy resin and the porogen. Alternatively, a solid-cylindrical resin block may be fabricated using a solid-cylindrical mold, and then the central portion of the cylindrical resin block may be punched to fabricate a hollow-cylindrical resin block.

As the epoxy resin, either an aromatic epoxy resin or a non-aromatic epoxy resin can be used. Examples of the aromatic epoxy resin include polyphenyl-based epoxy resins, epoxy resins containing a fluorene ring, epoxy resins containing triglycidyl isocyanurate, and epoxy resins containing a heteroaromatic ring (e.g., a triazine ring). Examples ofpolyphenyl-based epoxy resins include bisphenol A-type epoxy resins, brominated bisphenol A-type epoxy resins, bisphenol F-type epoxy resins, bisphenol AD-type epoxy resins, stilbene-type epoxy resins, biphenyl-type epoxy resins, bisphenol A novolac-type epoxy resins, cresol novolac-type epoxy resins, diaminodiphenylmethane-type epoxy resins, and tetrakis(hydroxyphenyl)ethane-based epoxy resins. Examples of non-aromatic epoxy resins include aliphatic glycidyl ether-type epoxy resins, aliphatic glycidyl ester-type epoxy resins, cycloaliphatic glycidyl ether-type epoxy resins, cycloaliphatic glycidyl amine-type epoxy resins, and cycloaliphatic glycidyl ester-type epoxy resins. These may be used singly, or two or more thereof may be used in combination.

Among these, at least one that is selected from the group consisting of bisphenol A-type epoxy resins, brominated bisphenol A-type epoxy resins, bisphenol F-type epoxy resins, bisphenol AD-type epoxy resins, epoxy resins containing a fluorine ring, epoxy resins containing triglycidyl isocyanurate, cycloaliphatic glycidyl ether-type epoxy resins, cycloaliphatic glycidyl amine-type epoxy resins, and cycloaliphatic glycidyl ester-type epoxy resins, and that has an epoxy equivalent of 6000 or less and a melting point of 170°C or lower, can be suitably used. The use of these epoxy resins allows formation of a uniform three-dimensional network structure and uniform pores, and also allows excellent chemical resistance and high strength to be imparted to the porous epoxy resin sheet.

As the curing agent, either an aromatic curing agent or a non-aromatic curing agent can be used. Examples of the aromatic curing agent include aromatic amines (e.g., meta-phenylenediamine, diaminodiphenylmethane, diaminodiphenyl sulfone, benzyldimethylamine, and dimethylaminomethylbenzene), aromatic acid anhydrides (e.g., phthalic anhydride, trimellitic anhydride, and pyromellitic anhydride), phenolic resins, phenolic novolac resins, and amines containing a heteroaromatic ring (e.g., amines containing a triazine ring). Examples of the non-aromatic curing agent include aliphatic amines (e.g., ethylenediamine, diethylenetriamine, triethylenetetramine, tetraethylenepentamine, iminobispropylamine, bis(hexamethylene)triamine, 1,3,6-trisaminomethylhexane, polymethylenediamine, trimethylhexamethylenediamine, and polyetherdiamine), cycloaliphatic amines (e.g., isophoronediamine, menthanediamine, N-aminoethylpiperazine, an adduct of 3,9-bis(3-aminopropyl)2,4,8,10-tetraoxaspiro(5, 5)undecane, bis(4-amino-3-methylcyclohexyl)methane, bis(4-aminocyclohexyl)methane, and modified products thereof), and aliphatic polyamidoamines containing polyamines and dimer acids. These may be used singly, or two or more thereof may be used in combination.

Among these, a curing agent having two or more primary amines per molecule can be suitably used. Specifically, at least one selected from the group consisting of meta-phenylenediamine, diaminodiphenylmethane, diaminodiphenyl sulfone, polymethylenediamine, bis(4-amino-3-methylcyclohexyl)methane, and bis(4-aminocyclohexyl)methane, can be suitably used. The use of these curing agents allows formation of a uniform three-dimensional network structure and uniform pores, and also allows high strength and appropriate elasticity to be imparted to the porous epoxy resin sheet.

A preferred combination of an epoxy resin and a curing agent is a combination of an aromatic epoxy resin and an aliphatic amine curing agent, a combination of an aromatic epoxy resin and a cycloaliphatic amine curing agent, or a combination of a cycloaliphatic epoxy resin and an aromatic amine curing agent. These combinations allow excellent heat resistance to be imparted to the porous epoxy resin sheet.

The porogen can be a solvent capable of dissolving the epoxy resin and the curing agent. The porogen is used also as a solvent that can cause reaction-induced phase separation after the epoxy resin and the curing agent are polymerized. Specific examples of substances which can be used as the porogen include cellosolves such as methyl cellosolve and ethyl cellosolve, esters such as ethylene glycol monomethyl ether acetate and propylene glycol monomethyl ether acetate, glycols such as polyethylene glycol and polypropylene glycol, and ethers such as polyoxyethylene monomethyl ether and polyoxyethylene dimethyl ether. These may be used singly, or two or more thereof may be used in combination.

Among these, at least one selected from the group consisting of methyl cellosolve, ethyl cellosolve, polyethylene glycol having a molecular weight of 600 or less, ethylene glycol monomethyl ether acetate, propylene glycol monomethyl ether acetate, polypropylene glycol, polyoxyethylene monomethyl ether, and polyoxyethylene dimethyl ether, can be suitably used. In particular, at least one selected from the group consisting of polyethylene glycol having a molecular weight of 200 or less, polypropylene glycol having a molecular weight of 500 or less, polyoxyethylene monomethyl ether, and propylene glycol monomethyl ether acetate, can be suitably used. The use of these porogens allows formation of a uniform three-dimensional network structure and uniform pores. These may be used singly, or two or more thereof may be used in combination.

In addition, a solvent in which a reaction product of the epoxy resin and the curing agent is soluble can be used as the porogen even if the epoxy resin or the curing agent is individually insoluble or poorly-soluble in the solvent at normal temperature. Examples of such a porogen include a brominated bisphenol A-type epoxy resin ("Epicoat 5058" manufactured by Japan Epoxy Resin Co., Ltd).

For example, the blending ratio of the curing agent to the epoxy resin is such that the curing agent equivalent is 0.6 to 1.5 per one epoxy group equivalent. An appropriate curing agent equivalent contributes to improvement in the characteristics of the porous epoxy resin sheet, such as the heat resistance, the chemical durability, and the mechanical characteristics.

For example, 40 to 80% by weight of the porogen can be used relative to the total weight of the epoxy resin, the curing agent, and the porogen. The use of an appropriate amount of the porogen allows formation of a porous epoxy resin sheet having the desired porosity, average pore diameter, and air permeability.

In order to obtain an intended porous structure, a curing accelerator may be added to the solution of the epoxy resin composition in addition to the curing agent. Examples of the curing accelerator include tertiary amines such as triethylamine and tributylamine, and imidazoles such as 2-phenol-4-methylimidazole, 2-ethyl-4-methylimidazole, and 2-phenol-4,5-dihydroxyimidazole.

The porosity, the average pore diameter, and the pore diameter distribution of the porous epoxy resin sheet vary depending on the types of the materials, the blending ratio of the materials, and reaction conditions (e.g., heating temperature and heating time at the time of reaction-induced phase separation). Therefore, in order to obtain the intended porosity, average pore diameter, and pore diameter distribution, optimal conditions are preferably selected.

One example of the method for adjusting the average pore diameter of the porous epoxy resin sheet within a desired range is to mix and use two or more types of epoxy resins having different epoxy equivalents. At this time, the difference between the epoxy equivalents is preferably 100 or more, and an epoxy resin that is liquid at normal temperature and an epoxy resin that is solid at normal temperature are mixed and used in some cases.

In addition, by control of the molecular weight of the cross-linked epoxy resin, the molecular weight distribution, the viscosity of the solution, the cross-linking reaction rate etc. at the time of phase separation, a bicontinuous structure of the cross-linked epoxy resin and the porogen can be fixed in a particular state, and thus a stable porous structure can be obtained.

The temperature and time required for curing the epoxy resin composition vary depending on the types of the epoxy resin and the curing agent, and thus are not particularly limited. In order to obtain a porous epoxy resin sheet having pores which are distributed uniformly and have uniform pore diameters, the curing process can be carried out at a room temperature. In the case of curing at a room temperature, the temperature is about 20 to 40°C, and the time is about 3 to 100 hours, and preferably about 20 to 50 hours. In the case of curing by heating, the temperature is about 40 to 120°C, and preferably about 60 to 100°C, and the time is about 10 to 300 minutes, and preferably about 30 to 180 minutes. After the curing process, postcuring (post-treatment) may be performed in order to increase the degree of cross-linking of the cross-linked epoxy resin. The conditions for the postcuring are not particularly limited. The temperature is a room temperature or about 50 to 160°C, and the time is about 2 to 48 hours.

The dimensions of the epoxy resin block are not particularly limited. In the case where the epoxy resin is in the shape of a hollow cylinder or a solid cylinder, the diameter of a cured product of the epoxy resin is, for example, 10 cm or more, and preferably 15 to 150 cm from the standpoint of the production efficiency of the porous epoxy resin sheet. The length (in the axial direction) of the cured product can also be set as appropriate taking into account the dimensions of the porous epoxy resin sheet to be obtained. In the case where the edge portion of the sheet is slit, the length of the cured product may be set about 1 to 10% greater than the width of the sheet.

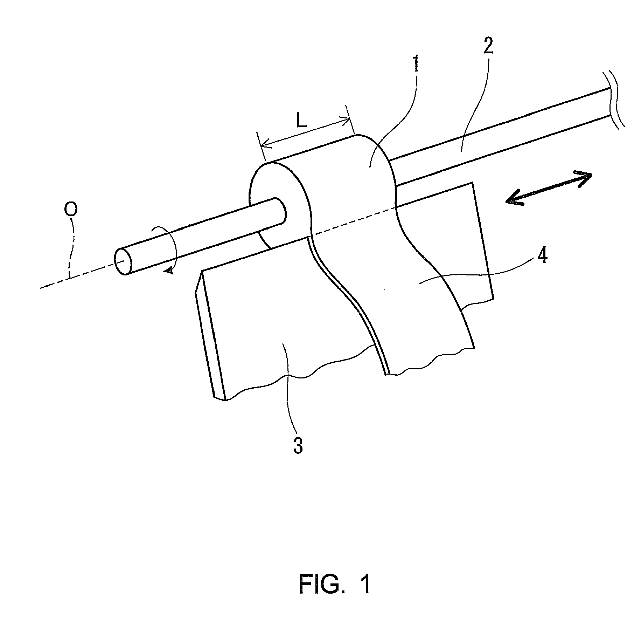

An overview of an example of the cutting step is shown in FIG. 1. An apparatus for producing a resin sheet can be suitably used for carrying out the cutting step, the apparatus including: a shaft 2 having a support portion for supporting a hollow-cylindrical or hollow-cylindrical resin block; a device (not shown) for rotating the shaft; a cutting blade 3 for cutting the resin block into a resin sheet by contacting with the resin block; and a device (not shown) for reciprocating the cutting blade 3 approximately parallel to the direction of the rotational axis of the resin block. For example, a commonly-known device such as a motor can be used as the device for rotating the shaft. For example, a commonly-known device such as a device having an elliptical cam and a motor can be used as the device for reciprocating the cutting blade 3. In one preferred embodiment of the apparatus, the length of the cutting blade 3 is twice or more the length of the support portion of the shaft 2 for supporting the resin block, and the maximum amplitude of reciprocation of the cutting blade 3 is equal to or larger than the length of the support portion of the shaft 2 for supporting the resin block.

The operation performed first in the cutting step is to rotate an epoxy resin block 1 mounted on the shaft 2 about the hollow cylinder axis or solid cylinder axis (rotational axis) O of the epoxy resin block 1. By bringing the cutting blade 3 into contact with the rotating epoxy resin block 1, the surface portion of the epoxy resin block 1 is skived, and an epoxy resin sheet 4 is thus obtained. In this case, a method can be preferably used in which the epoxy resin sheet 4 obtained by cutting is conveyed in a direction about 90 to 180° away from the direction of the blade. With this method, the cut surface of the epoxy resin sheet 4 can be made smoother.

In the present invention, when the surface portion of the epoxy resin block 1 is cut, the cutting blade 3 is reciprocated approximately parallel to the direction of the rotational axis O of the epoxy resin block 1. A detailed study by the present inventors has revealed that in the case of the method described in Patent Literature 1, during the progression of cutting of the epoxy resin block, blemishes (defective portions) extending in the sheet-flow direction tend to occur on the resultant sheet until the time when the length of the sheet continuously produced reaches about 30 m. In addition, it has been revealed that the defective portions are streaky defective portions extending along the longitudinal direction and include those having a large depth up to several micrometers, and that in the case where the sheet is used in a battery separator or a water treatment membrane in the form of a thin film having a thickness of 300 µm or less, the streaky defective portions may cause a phenomenon in which the sheet is broken (split) along the streaky defective portions when the battery separator or the water treatment membrane is being used or handled. Furthermore, it has been revealed that in the case where the sheet is used as a support of a composite reverse osmosis membrane and a skin layer is formed on the sheet, lifting of the skin layer occurs at the defective portions or the surface of the skin layer are likely to be cracked when the composite reverse osmosis membrane is being used under increased pressure. The present inventors have discovered that the cause of such defective portions lies in the fact that cutting chips accumulated in the vicinity of the contact portion between the cutting blade 3 and the epoxy resin block 1 along with continuous cutting cause damage to the surface of the epoxy resin sheet 4. Furthermore, the present inventors have found that moving the cutting blade 3 allows the cutting chips to fall from the contact portion between the cutting blade 3 and the epoxy resin block 1.

In the present invention, it is preferable that the length of the cutting blade 3 be twice or more a length L of the epoxy resin block 1 in the direction of the rotational axis O, and the amplitude of reciprocation of the cutting blade 3 be equal to or larger than the length L of the epoxy resin block 1 in the direction of the rotational axis O. As a result of a detailed study, the present inventors have found that cutting chips accumulated in the vicinity of the cutting blade 3 can be removed from the ends of the epoxy resin block 1 by the reciprocation of the cutting blade 3. Therefore, setting the length and reciprocation amplitude of the cutting blade 3 as described above can further ensure that the cutting chips are allowed to fall from the ends of the epoxy resin block 1 over the entire distance over which the cutting by the cutting blade 3 is performed.

In addition, a fluid may be additionally introduced to the vicinity of the contact portion between the cutting blade 3 and the resin block 1 to assist the removal of the cutting chips. In this case, the fluid may be any fluid that causes no defect in the blade or the resin block. When the fluid is a gas, examples thereof include air and inert gases such as nitrogen. When the fluid is a liquid, examples thereof include water, solvents that can be used as the porogen, and alcohols. The flow rate and flow velocity of the fluid introduced may be appropriately set according to need. In the case where, for example, blow of gas such as air or nitrogen is employed, the temperature and velocity of the gas are preferably about 5 to 40°C and 5 to 50 m/seconds. The effect of fluid introduction is significant particularly in the case of using a resin block whose surface to be cut is wet by the influence of the porogen or the like.

The movement speed of the cutting blade 3 is preferably 1/200 to 1/5, more preferably 1/20 to 1/5, of the length of the epoxy resin block 1 in the direction of the rotational axis per second. For example, in the case where the width of the epoxy resin block 1 is 40 cm, the movement speed is preferably 0.2 to 8 cm/second, and more preferably 2 to 8 cm/second. Moving the cutting blade 3 at a speed within this range facilitates the removal of the cutting chips, particularly in the case of a wet resin block retaining the porogen. When the speed is too low, the cutting chips cannot be fully removed. When the speed is too high, the cutting chips cannot be moved, and thus cannot be fully removed in some cases. In addition, when the speed is too high, blemishes extending in the width direction may occur.

The line speed at cutting of the epoxy resin block 1 and the rotational speed of the resin block 1 are, for example, about 1 to 100 m/minute, and preferably 2 to 50 m/minute. The line speed is preferably adjusted as appropriate in accordance with the above-described movement speed of the cutting blade 3.

In addition, in view of slight reduction in thickness caused by the removal of the porogen from the epoxy resin sheet and the subsequent drying, appropriate adjustment may be made for contact of the cutting blade 3 with the epoxy resin block 1 so that an epoxy resin sheet having a thickness slightly larger than the intended thickness of the porous epoxy resin sheet can be obtained.

Next, the porosification step will be described. In the porosification step, the porogen is extracted and removed from the epoxy resin sheet to form a porous epoxy resin sheet. In order to extract and remove the porogen from the epoxy resin sheet, a method is preferably used in which a solvent capable of dissolving the porogen is brought into contact with the epoxy resin sheet.

As the solvent for extracting and removing the porogen from the epoxy resin sheet, at least one selected from the group consisting of water, DMF (N,N-dimethylformamide), DMSO (dimethylsulfoxide), and THF (tetrahydrofuran), is preferably used depending on the type of the porogen. In addition, a supercritical fluid of water, carbon dioxide, or the like, can also be used as the solvent for removing the porogen. Furthermore, in order to actively remove the porogen from the epoxy resin sheet, ultrasonic washing may be performed, or the solvent may be heated and then used. As the solvent, a halogen-free solvent can be particularly preferably used.

The method for bringing the porogen into contact with the solvent is not particularly limited either. A commonly-known method, such as an immersion method or a method using a flow of the solvent having been pressurized, can be used. For example, in the case where the porogen is removed by immersing the epoxy resin sheet in the solvent, a multi-stage washer having a plurality of washing tanks can be suitably used. The number of the stages of washing is more preferably three or more. In addition, a method may be used in which washing by means of counterflow which substantially corresponds to multi-stage washing is performed. Furthermore, the temperature or the type of the solvent may be changed for each stage of washing.

After the porogen is removed in the above manner, the porous epoxy resin sheet is preferably subjected to a drying process. The conditions for drying are not particularly limited. The temperature is generally about 40 to 120°C, and preferably about 50 to 100°C. The drying time is about 10 seconds to 3 hours. For the drying process, a dryer can be used that employs a commonly-known sheet drying method, such as a tenter method, a floating method, a roll method, or a belt method. A plurality of drying methods may be combined.

By further performing a step of winding the thus-obtained porous epoxy resin sheet into a roll, a porous epoxy resin sheet roll which is most suitable as a shipping form for industrial-scale use can be obtained.

According to the production method of the present invention, it is possible to obtain a long strip-shaped porous epoxy resin sheet having a length of 30 m or more and free of defective portions that are likely to cause breakage of the sheet. Specifically, it is possible to obtain a long strip-shaped porous epoxy resin sheet having a length of 30 m or more and free of defective portions having a depth of 3 µm or more or even free of defective portions having a depth of 1 µm or more.

In the present invention, the longer the porous epoxy resin sheet continuously produced is, the more significant the effect of the present invention is. Therefore, the length of the porous epoxy resin sheet continuously produced is preferably 30 m or more, more preferably 100 m or more, and even more preferably 1000 m or more.

According to the production method of the present invention, a long strip-shaped porous epoxy resin sheet free of the defective portions as described above and having a thickness of 5 to 300 µm (particularly 10 to 300 µm) can be obtained. Therefore, it is made easier to industrially produce battery separators (particularly separators for nonaqueous electrolyte batteries such as lithium-ion secondary batteries), water treatment membranes, etc.

Although the foregoing description has been given using a porous epoxy resin sheet as an example, the mechanism of occurrence of the defective portions is common to all kinds of thermosetting resins. Therefore, it should be understood that the production method of the present invention can be applied to production of porous thermosetting resin sheets other than porous epoxy resin sheets, and the effect of the present invention can be obtained.

In another aspect, the present invention is a porous thermosetting resin sheet having a thickness of 5 to 300 µm, having a length of 30 m or more, and being free of defective portions having a depth of 3 µm or more. The present inventors have found that when the depth of the defective portions of the porous thermosetting resin sheet is less than 3 µm, problems such as the above-described breakage of the sheet do not arise in the case where the sheet is used in the form of a thin film having a thickness of about 300 µm or less. The porous thermosetting resin sheet preferably has no defective portions having a depth of 1 µm or more. In addition, the porous thermosetting resin sheet preferably has no defective portions having a depth of 3 µm or more and having a width more than 40 µm, and more preferably has no defective portions having a depth of 1 µm or more and having a width more than 20 µm.

In one example, the defective portions are in the form of streaky defective portions having a depth of 3 µm or more and having a length of 5 cm or more. In another example, the defective portions are in the form of holes having a depth of 3 µm or more. For example, the depth of the defective portions can be measured using a laser microscope.

From the standpoint of usefulness for the intended use, a suitable example of the porous thermosetting resin sheet is a porous epoxy resin sheet.

In the present invention, the thickness of the porous thermosetting resin sheet is 5 to 300 µm, and preferably 10 to 300 µm. When the porous thermosetting resin sheet has a thickness within the above range and is a porous epoxy resin sheet, the porous thermosetting resin sheet can be preferably employed for the intended use in a battery separator, a water treatment membrane, or the like. In the case of use in a battery separator, the thickness of the porous epoxy resin sheet is, for example, about 5 to 50 µm, preferably 10 to 50 µm, and more preferably 15 to 40 µm. In the case of use in a water treatment membrane, such as use as a support of a composite reverse osmosis membrane, the thickness of the porous epoxy resin sheet is, for example, about 30 to 250 µm, and preferably 50 to 200 µm.

The width of the porous thermosetting resin sheet may be set as appropriate depending on the intended use, and is, for example, 3 to 200 cm. In the case where the porous thermosetting resin sheet is a porous epoxy resin sheet and is intended for use in a battery separator, the width is preferably 3 to 50 cm, and more preferably 5 to 30 cm, from the standpoint of handleability. In the case of use in a composite reverse osmosis membrane, the width is preferably 10 to 200 cm, and more preferably 40 to 150 cm.

The porosity, the average pore diameter, and the pore diameter distribution of the porous thermosetting resin sheet may be determined as appropriate depending on the intended use. In the case where the porous thermosetting resin sheet is a porous epoxy resin sheet, the porosity is, for example, about 20 to 80%, and the pore diameter distribution is preferably uniform in the thickness direction of the sheet. In this case, high performance can be achieved in use in a battery separator and use in a water treatment membrane. In addition, in the case of use as a support of a composite reverse osmosis membrane, the average pore diameter obtained through a mercury intrusion method (initial pressure: 7 kPa) is preferably 0.01 to 0.4 µm, and more preferably 0.05 to 0.2 µm. In this case, a high-performance skin layer can be formed.

The length of the porous thermosetting resin sheet is 30 m or more, preferably 100 m or more, and more preferably 1000 m or more.

When shipped for industrial-scale use, the porous thermosetting resin sheet is preferably provided in the form of a porous thermosetting resin sheet roll formed by winding the porous thermosetting resin sheet. The porous thermosetting resin sheet roll may or may not have a core material at its center.

### Examples

Hereinafter, the present invention will be described in detail with reference to examples and comparative examples. However, the present invention is not limited to the examples.

### [Examination for defective portion of porous epoxy resin sheet]

Porous epoxy resin sheets produced were visually checked for the presence or absence of defective portions of 0 to 100 m length. When a defective portion was visually observed, the depth of the defective portion was measured using a laser microscope (VK-9700 II manufactured by KEYENCE CORPORATION).

### [Average pore diameter of porous epoxy resin sheet]

The porosities and average pore diameters of the porous epoxy resin sheets were measured by a mercury intrusion method using Autopore 9520 manufactured by Shimadzu Corporation. Median diameters measured under the condition of an initial pressure of 7 kPa were adopted as the average pore diameters.

### Example 1

### [Fabrication of resin block]

Mixture of 1398 g of a bisphenol A-type epoxy resin having an epoxy equivalent of 184 to 194 (jER 828, Japan Epoxy Resin Co., Ltd), 932 g of a bisphenol A-type epoxy resin having an epoxy equivalent of 3000 to 5000 (jER 1010, Japan Epoxy Resin Co., Ltd), 520 g of bis(4-aminocyclohexyl)methane serving as a curing agent, and 5200 g of polyethylene glycol (PEG 200, Sanyo Chemical Industries, Ltd.), which had a viscosity of 1800 mPa·s (measured using a tuning-fork vibro viscometer, SV-10H), was stirred using Three-One Motor at 400 rpm for 15 minutes to form a resin composition. Next, a mold release agent (QZ-13 manufactured by Nagase ChemteX Corporation) was applied thinly to the inner side of an 8L hollow-cylindrical stainless steel container (having an inner diameter of 20 cm and a height of 28 cm), and was then dried at 100°C. The resin composition was added to the container, and was allowed to stand still for 7 days while the ambient temperature was maintained at 25°C and the temperature of the composition was maintained at 20°C to 40°C. Thus, a hollow-cylindrical epoxy resin block having a diameter of 19.8 cm and a length of 24 cm was obtained.

### [Thin film cutting]

The obtained resin block was cut to form a ring-shaped resin block having an axial length of 20 mm, and the ring-shaped resin block was set in a cutting lathe equipped with a means capable of reciprocating a cutting blade (having a length of 300 m). The resin block was rotated, and the cutting blade was brought into contact with the resin block. At this time, the cutting blade was reciprocated parallel to the direction of the rotational axis of the resin block at a speed of 2 mm/s. The amplitude of reciprocation of the cutting blade was 20 mm. In this manner, the epoxy resin was cut at a line speed of 10 m/minute to obtain a 100 m-long sheet having a thickness of about 130 µm.

The obtained sheet was immersed in pure water for 12 hours to remove polyethylene glycol, and thus a porous epoxy resin sheet was obtained. Furthermore, the porous epoxy resin sheet was dried in a dryer set at 50°C for about 4 hours, and thus a porous epoxy resin sheet having a thickness of 90 µm and an average pore diameter of 0.06 µm was obtained. When examination for defective portions in the surface of the obtained porous epoxy resin sheet was performed by the above-described method, defective portions in the surface of the porous epoxy resin sheet were not visually observed, and it was found that defective portions having a depth of 1 µm or more did not occur.

### Example 2

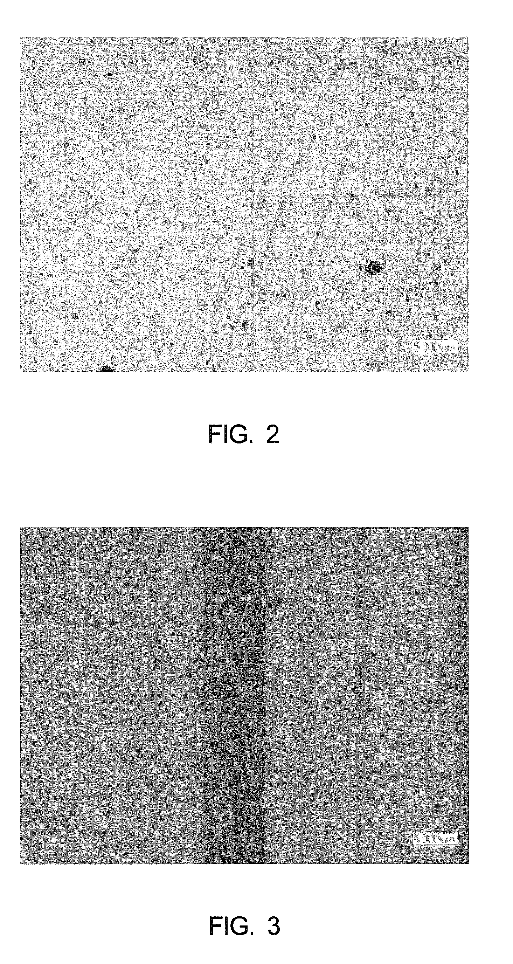

A porous epoxy resin sheet having a thickness of 30 µm and an average pore diameter of 0.06 µm was obtained in the same manner as in Example 1, except that the thickness of the resin sheet cut from the resin block was changed. When examination for defective portions in the surface of the obtained porous epoxy resin sheet was performed by the above-described method, although a streaky defective portion having a depth of about 0.64 µm and a streaky defective portion having a depth of about 0.12 µm were observed, it was found that defective portions having a depth of about 1 µm or more did not occur (an optical photomicrograph of the surface of the sheet is shown in FIG. 2 for reference).

### Comparative Example 1

A porous epoxy resin sheet having a thickness of 100 µm and an average pore diameter of 0.06 µm was obtained in the same manner as in Example 1, except that the cutting was performed while the cutting blade was kept stationary without being moved. During the cutting, a considerable amount of cutting chips were accumulated on the cutting blade. When examination for defective portions in the surface of the obtained porous epoxy resin sheet was performed by the above-described method, a plurality of streaky defective portions were observed even within a region of the sheet up to 30 m from the front edge. The depths of the defective portions were 3.2 µm and 5.1 µm (an optical photomicrograph of the surface of the sheet is shown in FIG. 3 for reference).

### Comparative Example 2

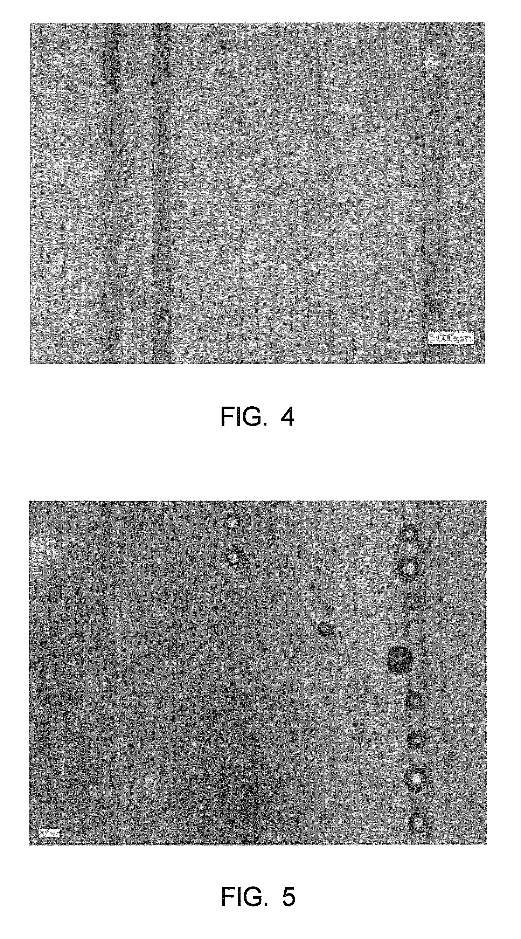

A porous epoxy resin sheet having a thickness of about 30 µm and an average pore diameter of 0.06 µm was obtained in the same manner as in Example 1, except that the cutting was performed while the cutting blade was kept stationary without being moved. During the cutting, a considerable amount of cutting chips were accumulated on the cutting blade. When examination for defective portions in the surface of the obtained porous epoxy resin sheet was performed by the above-described method, a streaky defective portion having a depth of 0.9 to 1.6 µm and a streaky defective portion having a depth of 3.8 µm were observed even within a region of the sheet up to 30 m from the front edge (an optical photomicrograph of the surface of the sheet is shown in FIG. 4 for reference). When a polyamide skin layer was formed on the sheet, lifting of the skin layer occurred along the 3.8 µm-deep defective portion (an optical photomicrograph of the surface of the sheet is shown in FIG. 5 for reference).

## Claims

1. A method for producing a porous thermosetting resin sheet, the method comprising the steps of:
cutting a hollow-cylindrical or solid-cylindrical thermosetting resin block containing a porogen into a sheet of a thermosetting resin with a predetermined thickness by bringing a cutting blade into contact with the thermosetting resin block while rotating the thermosetting resin block about a hollow cylinder axis or a solid cylinder axis; and
making the resultant thermosetting resin sheet porous by removing the porogen from the thermosetting resin sheet, wherein
the cutting blade is reciprocated approximately parallel to a direction of the rotational axis of the thermosetting resin block while the cutting is being performed.

2. The production method according to claim 1, wherein a length of the cutting blade is twice or more a length of the thermosetting resin block in the direction of the rotational axis, and an amplitude of reciprocation of the cutting blade is equal to or larger than the length of the thermosetting resin block in the direction of the rotational axis.

3. The production method according to claim 1, wherein a movement speed of the cutting blade is 1/200 to 1/5 of the length of the thermosetting resin block in the direction of the rotational axis per second.

4. The production method according to claim 1, wherein a fluid is introduced to a vicinity of a contact portion between the cutting blade and the thermosetting resin block in cutting the thermosetting resin block into the sheet.

5. The production method according to claim 1, wherein the resultant porous thermosetting resin sheet has a thickness of 5 to 300 µm.

6. The production method according to claim 1, wherein the thermosetting resin is an epoxy resin.

7. The production method according to claim 1, further comprising a step of winding the resultant sheet into a roll.

8. An apparatus for producing a resin sheet, the apparatus comprising: a shaft having a support portion for supporting a hollow-cylindrical or hollow-cylindrical resin block; a device for rotating the shaft; a cutting blade for cutting the resin block into a resin sheet by contacting with the resin block; and a device for reciprocating the cutting blade approximately parallel to a direction of a rotational axis of the resin block.

9. The production apparatus according to claim 8, wherein a length of the cutting blade is twice or more a length of the support portion of the shaft for supporting the resin block, and a maximum amplitude of reciprocation of the cutting blade is equal to or larger than the length of the support portion of the shaft for supporting the resin block.

10. A porous thermosetting resin sheet having a thickness of 5 to 300 µm, having a length of 30 m or more, and being free of defective portions having a depth of 3 µm or more.

11. The porous thermosetting resin sheet according to claim 10, having a width of 3 to 200 cm.

12. The porous thermosetting resin sheet according to claim 10, obtained by the production method according to claim 1.

13. The porous thermosetting resin sheet according to claim 10, wherein the thermosetting resin is an epoxy resin.

14. A porous thermosetting resin sheet roll, formed by winding the porous thermosetting resin sheet according to claim 10.
